# EUROPEAN PATENT SPECIFICATION

(11) **EP 1 491 057 B1**
(45) Date of publication and mention of the grant of the patent: **15.07.2015**
(21) Application number: 03709790.4
(22) Date of filing: 17.03.2003
(51) Int. Cl.: H04N 9/64

(54) **VIDEO APPARATUS**
VIDEOGERÄT
APPAREIL VIDEO

(30) Priority: 04.04.2002 EP 02290838
(43) Date of publication of application: 29.12.2004
(73) Proprietor: Thomson Licensing, 92130 Issy-les-Moulineaux (FR)
(72) Inventor: DUMONT, Frank, 269564 SINGAPORE (SG); TAN, Chee, Lam, 730520 SINGAPORE (SG); LAM, Yoke, Lin, 789799 SINGAPORE (SG); BEKESI, Thomas, 78078 Niedereschach (DE)
(74) Representative: Thies, Stephan
(86) International application number: PCT/EP2003/002737
(87) International publication number: WO 2003/085987

(56) References cited:
- EP-A- 1 187 492
- PATENT ABSTRACTS OF JAPAN vol. 1997, no. 10, 31 October 1997 (1997-10-31) & JP 09 149327 A (HITACHI LTD), 6 June 1997 (1997-06-06)
- PATENT ABSTRACTS OF JAPAN vol. 1999, no. 03, 31 March 1999 (1999-03-31) & JP 10 336603 A (SANYO ELECTRIC CO LTD), 18 December 1998 (1998-12-18)
- LEBOWSKY F ET AL: "A multi-purpose scart interface to support 100Hz/16:9/multi-media displays", 19940101, 1 January 1994 (1994-01-01), pages 492-497, XP006505134,

## Description

The invention relates to a video apparatus.

Video sequences can be represented as video signals according to several standards.

A first well-know standard is Composite Video Blanking Signal (thereafter CVBS) which consist of a single signal where a luminance signal is frequency multiplexed with a chrominance signal composed of 2 chrominance components.

According to another well-know standard, video sequences are represented by a red signal, a green signal and a blue signal (RGB standard).

JP-A-09 149 327, JP-A-10 336 603, EP-A-1 187 492 and XP006505134 (Lebowsky et al, 1994) describe video apparatus using signals according to one or several of the above-mentioned standards with provision of an on-screen display. XP006505134 shows an apparatus as described in the introductory part of claim 1.

In the past, RGB signals have been mainly used for two purposes : first, inside a video display (TV set for instance), the received CVBS signals were converted into RGB signals by a video circuit, each component of the video signal then feeding a corresponding gun of a cathode ray tube ; second, the RGB signals were used from one video apparatus to another to describe a picture to be superimposed (as OSD - On-Screen Display) on a main video sequence represented by a CVBS signal transmitted in parallel, generally on the same Scart connector.

In recent times, notably because of the use of video digital streams (which can be converted into RGB signals by digital circuits as easily as into CVBS signals), it has become more common to use RGB signals to transmit the main video sequence from one video apparatus to another, generally by using the conventional Scart connector.

As RGB signals may now have two different functions (OSD only or main picture), it may occur that a circuit or an apparatus be designed for one of these two functions only and thus misadapted to use the other function.

The invention seeks to solve this problem.

The invention proposes a video apparatus as defined in claim 1. The video apparatus comprises a video circuit having a video decoder and able to operate with at least two types of analog video signals, a connector for receiving a video signal, the connector having at least a first pin connected to a first analog video signal input of the video decoder, at least a second pin connected to a second analog video signal input of the video decoder, and at least a third pin connectable to a fast blanking signal input of the video decoder, transmission means coupling the first pin and the second pin to the video circuit. The video apparatus is characterized by further comprising switching means arranged between the fast blanking signal input of the video decoder and the third pin, the switching means switching between connected state and disconnected state based on a control signal, detection means connected to the third pin for determining whether the signal received from the third pin toggles during a frame, control means responsive to said determination for sending said control signal to cause said switching means to switch to the disconnected state when the signal received from the third pin toggles during a frame, and to the connected state otherwise.

According to preferred embodiments:
the video circuit comprises means for recording said video signal;
the control means is further responsive to a selection made by the user.

The invention and other features thereof will be understood in the light of the following description made with reference to the attached drawing where :
- Figure 1 represents a first video recorder;
- Figure 2 represents a second video recorder;
- Figure 3 represents a first and a second video apparatus connected to each other.

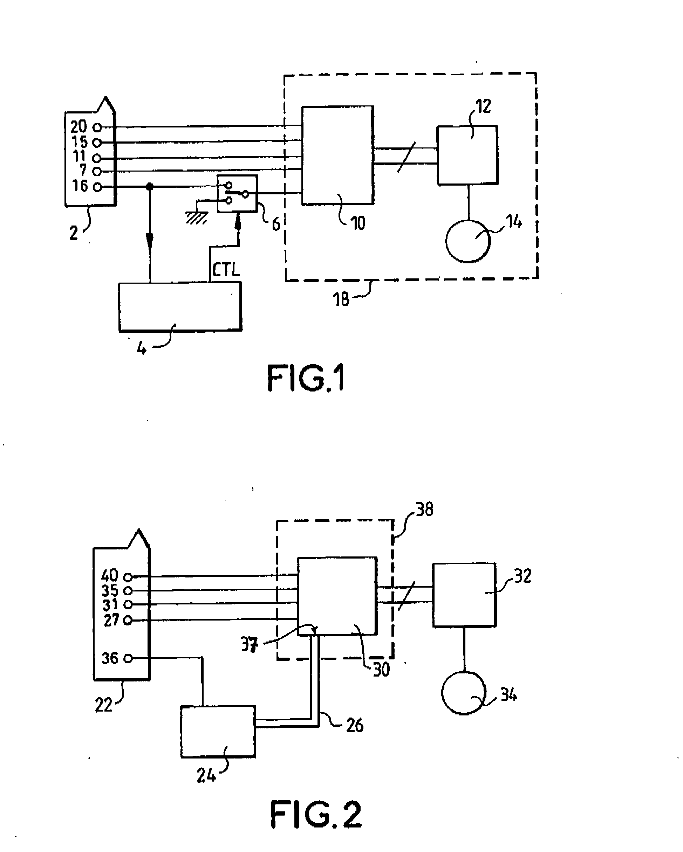

Figure 1 represents the parts of a video recorder which are meant for recording a video sequence received on a Scart connector 2 on a hard disk drive 14. Of course, the invention is not limited to this type of medium and any type of medium such as a DVD or a tape could be used for recording instead.

The connector 2 has several pins, notably a CVBS pin 20, an R pin 15, a G pin 11, a B pin 7 and an FB pin 16.

The CVBS pin 20 is meant to receive a CVBS signal from another video apparatus, for instance from a Video Cassette Recorder (VCR) - in playback mode -, or a satellite, cable or terrestrial decoder - generating the CVBS signal based on a compressed digital stream.

The R-, G-, and B- pins 15, 11, 7 are meant to receive RGB signals from the other apparatus. These RGB signals can either represent only a part of the video screen in order to be superimposed as OSD information on a main video sequence represented by the CVBS signal, or represent the whole video screen as a complete video sequence.

FB pin 16 carries a fast-blanking signal received from the other apparatus and meant to indicate for each location on the screen which of the CVBS signal and the RGB signals should be considered. More precisely, the CVBS signal and RGB signals are describing the video information line by line ; at a given moment in time, if the fast-blanking signal is low, the CVBS signal is used as video information to be displayed on the screen, whereas if the fast-blanking signal is high, the RGB signals are used instead.

A video decoder 10 (for instance a Philips SAA71118) is connected to the CVBS pin 20 and to the R-, G-,B-pins 15, 11,7. The video decoder 10 is connected to the FB pin 16 through a switching circuit 6. This switching circuit 6 allows to connect the fast-blanking input of the video decoder 10 selectively to the FB pin 16 or to ground, as explained below.

A detection circuit 4 also receives the fast-blanking signal from FB pin 16. Based on the fast-blanking signal, as further explained below, the detection circuit 4 issues a control signal CTL which controls operation of the switching circuit 6.

The video decoder 10 generates a digital stream (for instance a 4:2:2 stream according to the ITU 656 standard) representing the video sequence received from the Scart connector 2. The digital stream is then converted into a MPEG stream by MPEG encoder 12 and recorded by the hard disk drive 14 (through a bit-stream processor - not represented).

The video decoder 10, the MPEG encoder 12 and the hard disk drive 14 are thus realising a video circuit 18 for digitally recording analog video signals it receives.

The detection circuit 4 is for instance a micro-processor which receives the fast-blanking signal from FB pin 16 on an interrupt input. At the beginning of every field of the CVBS signal, the interrupt is enabled. Each time the fast-blanking signal is high, an interrupt is generated. The time duration of the pulse (between rising edge and falling edge) of the fast-blanking signal is measured. The number of interrupts over the field is counted.

When the fast-blanking signal on FB pin 16 is constant for the whole active period of the lines of a frame (i. e. either when the video sequence is represented by a CVBS signal without RGB as OSD - meaning the type of video signal on the Scart connector 2 is CVBS only - , or when the whole video sequence is represented as RGB - meaning the type of video signal on the Scart connector 2 is RGB only), the detection circuit 4 controls the switch 6 to connect the FB pin 16 to the fast-blanking input of the video decoder 10.

With the above-indicated example for a detection circuit (micro-processor with interrupt), it can be considered that the fast-blanking signal is constant for the whole active period of the lines if the number of fast-blanking pulses detected to have a duration of less than 52 µs is equal to 0 or 1.

When the fast-blanking signal on FB pin 16 is toggling during a frame (*i.e.* when the Scart connector 2 receives a CVBS signal as main picture and RGB signals as OSD), the detection circuit 4 controls the switch 6 to connect the fast-blanking input of the video decoder to ground in order to mute the fast-blanking signal passed to the video decoder 10. In this way, the video decoder 10 does not consider the OSD information superimposed on the video sequence represented by the CVBS signal and the video recorder only records this video sequence, without the OSD information. Effectively, this OSD information is generally undesirable for recording as it generallly comprises menus, a clock, a remaining time on the tape, *etc.* of the apparatus which is connected to the Scart connector 2 (previously called "other apparatus").

With the above-indicated example for a detection circuit (micro-processor with interrupt), it can be considered that the fast-blanking signal is toggling if the number of fast-blanking pulses detected to have a duration of less than 52 µs is 2 or more.

Of course, the muting of the fast-blanking signal operated by the detection circuit 4 when the received fast-blanking signal is toggling can be made optional (for instance in a menu of the video recorder), so that the user may choose between recording or not the OSD information received on Scart connector 2.

As a further possible feature, the detection circuit 4 (for instance a micro-processor) and the video decoder 10 can communicate via a bus (not represented) and the detection circuit 4 can then send information (parameters) to configure the video decoder 10 differently depending on the type of signal detected by detection circuit 4 (for instance by programming registers).

A second example of a video apparatus, which is also a video recorder, is represented at Figure 2.

A Scart connector 22 has several pins, notably a CVBS pin 40 to receive a CVBS signal from another video apparatus, an R pin 35, a G pin 31, a B pin 27 to receive RGB signals from the other apparatus and an FB pin 36 to carry a fast-blanking signal received from the other apparatus and meant to indicate for each location on the screen which of the CVBS signal and the RGB signals should be considered.

The CVBS pin 40 on the one hand and the R-, G- and B-pins 35, 31, 27 on the other hand are connected to a video decoder 30, for instance a Techwell TW9901 integrated circuit. The video decoder 30 is a video circuit 38 able to convert the received CVBS signal or RGB signals into a digital stream, precisely a 4:2:2 stream according to the ITU 656 standard.

The selection between the two possible analog inputs (CVBS or RGB) is made by instructions internal to the video decoder 30 and can be controlled from the outside via a serial bus 37.

The video decoder 30 has no fast-blanking input and is consequently unable to convert correctly a video signal mixing a CVBS signal and RGB signals to be superimposed on the picture represented by the CVBS signal.

As explained in relation to Figure 1, the digital stream generated by the video decoder 30 is passed to a MPEG encoder 32 in order to record the corresponding video sequence as a MPEG stream on a hard disk drive 34.

FB pin 36 (carrying the fast-blanking signal received on the Scart connector 22) is connected to a micro-controller 24. The micro-controller has means to determine the type of video signal received on the Scart connector 22 depending on the fast-blanking signal received from FB pin 36.

Depending on the type of received video signal, the micro-controller 24 sends instructions to the video decoder 30 by a serial communication via serial bus 37. These instructions control the input selection in the video decoder 30 as indicated in the below table.

| Type of video signal on Scart 2 (depending on signal on FB pin 36) | Input selection in video decoder 30 |
|---|---|
| CVBS only | CVBS (pin 40 used as input) |
| CVBS with RGB as OSD | CVBS (pin 40 used as input) |
| RGB only | RGB (pins 35, 31, 27 used as input) |

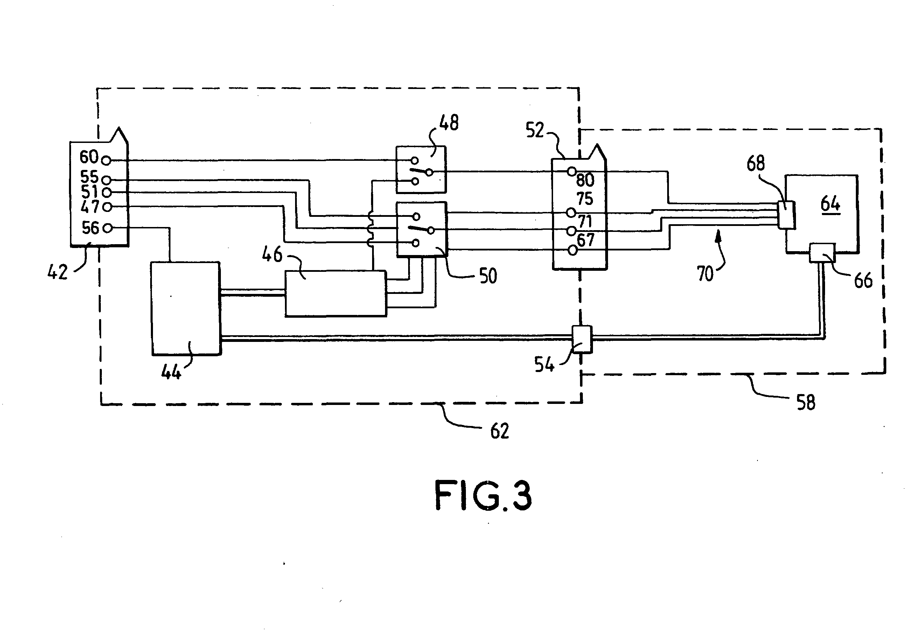

Figure 3 represents a first video apparatus 62 as third example of a video apparatus. The first video apparatus 62 is for instance a Personal Video Recorder (PVR) having notably a reproduction part 46 which can generate CVBS signals or RGB signals representing a video sequence recorded on a medium, for instance a DVD. The CVBS signals from the reproduction part 46 are sent to a first input of a switch 48 and the RGB signals from the reproduction part 46 are sent to first inputs of a RGB switch 50.

The first video apparatus 62 has a first Scart connector 52 for outputting video signals and a second Scart connector 42 for receiving video signals.

The second Scart connector 42 has a CVBS pin 60, a R-pin 55, a G-pin 51, a B-pin 47 and a fast-blanking (FB) pin 56. The CVBS pin 60 is connected to a second input of the switch 48 and the R-, G- and B pins are connected to second inputs of the RGB switch 50.

Switch 48 has an output connected to a CVBS pin 80 of the first Scart connector 52, whereby switch 48 allows to selectively connect the CVBS pin 80 of the first Scart connector 52 to the CVBS output from the reproduction part 46 or to the CVBS pin 60 of the second Scart connector 42.

RGB switch 50 has a RGB output (comprising 3 physical outputs for for outputting RGB signals) connected to RGB pins 67, 71, 75 of the first Scart connector 52, whereby RGB switch 50 allows to selectively connect the RGB pins 67, 71, 75 of the first Scart connector 52 to the RGB output from the reproduction part 46 or to the RGB pins 47, 51, 55 of the second Scart connector 42.

The first video apparatus 62 further comprises a micro-controller 44 which is connected to the fast-blanking pin 56 of the second Scart connector 42. Micro-controller 44 is linked to a serial bus 54 (RS232) of the first video apparatus, for serial data communication of the micro-controller 44 with a second video apparatus 64 to be connected to the serial bus 54.

The second video apparatus 64 is also meant to be connected to the first Scart connector 52. The second video apparatus 64 has no fast-blanking input and cannot support therefore combined CVBS and RGB signals on the first Scart connector 52.

In the described example, the second video apparatus 64 is a plasma display having as video input a Cinch connector 68 (without fast-blanking pin) and connected to the serial bus 54 of the first video apparatus 62 at a serial bus 66.

A specific cable 70 links the first Scart connector 52 of the first video apparatus (PVR) 60 to the Cinch connector 68 of the second video apparatus (plasma display) 64 by connecting corresponding pins (CVBS, R, G, B) in each connector together.

The second video apparatus (plasma display) 64 together with the cables linking it to the first video apparatus (PVR) 62 is a video circuit 58 which does not have the ability to process mixed CVBS and RGB signals.

Switch 48 and RGB switch 50 are controlled by a micro-processor (for instance in micro-controller 44, but another micro-processor could be used) to select the source of video signal to be transmitted to the first Scart connector 52 and hence to the second video apparatus (plasma display) 64. The type of video signals (CVBS or RGB) used as an input by the second video apparatus (plasma display) 64 is user-selectable but can also be remotely controlled by adequate instructions received on the serial bus 66.

When CVBS signals are used as an input by the second video apparatus 64, the switch 48 in the first apparatus (PVR) 62 is set depending on the choice of the user: if the user wishes to watch the video signals received on the second Scart connector 42, the switch 48 connects the CVBS pin 60 of the second Scart connector 42 to the CVBS pin 80 of the first Scart connector 52 ; if the user wishes to watch the video sequence reproduced by the reproduction part 46, the switch 48 connects the CVBS output of the reproduction part 46 to the CVBS pin 80 of the first Scart connector 52.

Similarly, when RGB signals are used as as input by the second video apparatus 64, the RGB switch 50 in the first apparatus (PVR) 62 is used to select between the second Scart connector 42 or the reproduction part 46 as a source of RGB video signals.

It can be noted that the first video apparatus (PVR) 62 needs not receive the information as to which type of video signals is used in the second video apparatus (plasma display) 64 : the switch 48 and the RGB switch 50 can be set simultaneously, depending on the source of video signals requested by the user (second Scart connector 42 or reproduction part 46) and not on the type of video signals used in the second video apparatus 46.

The micro-controller 44 receives the fast-blanking signal from pin 56 of the second Scart connector 42. Based on this fast-blanking signal, which is indicative of which of the CVBS signal and the RGB signal defines the video signal at any time, the micro-controller 44 can generate an information ("detected type") relating to the type of video signals received on the second Scart connector 42.

When the second Scart connector 42 is used as a video source (switch 48 and RGB switch 50 connect the second Scart connector 42 to the first Scart connector 52), an instruction controlling the type of video signals used as an input in the second video apparatus (plasma display) 64 is sent by the micro-controller 44 to the second video apparatus 64 via seria buses 54 and 66 depending on the detected type. The following table summarizes the instructions sent to the second video apparatus 64 depending on the detected type.

| Detected type | Instruction to second video apparatus |
|---|---|
| CVBS only | Use CVBS as video input |
| CVBS with RGB as OSD | Use CVBS as video input |
| RGB only | Use RGB as video input |

In this way, an automatic selection of the best mode of operation (CVBS or RGB) of the second video apparatus 64 is achieved, whatever the type of video signals received on the second Scart connector 42 may be.

## Claims

1. Video apparatus comprising:
- a video circuit (18) having a video decoder (10) and able to operate with at least two types of analog video signals,
- a connector (2) for receiving a video signal, the connector (2) having at least a first pin connected to a first analog video signal input of the video decoder (10), at least a second pin connected to a second analog video signal input of the video decoder (10), and at least a third pin (16) connectable to a fast blanking signal input of the video decoder (10),
- transmission means coupling the first pin and the second pin to the video circuit (18),
**characterized in that** the video apparatus further comprises
- switching means (6) arranged between the fast blanking signal input of the video decoder (10) and the third pin (16), the switching means switching between connected state and disconnected state based on a control signal (CTL),
- detection means (4) connected to the third pin (16) for determining whether the signal received from the third pin (16) toggles during a frame,
- control means (4) responsive to said determination for sending said control signal (CTL) to cause said switching means (6) to switch to the disconnected state when the signal received from the third pin (16) toggles during a frame, and to the connected state otherwise.

2. Video apparatus according to claim 1, wherein the video circuit (18) comprises means (14) for recording said video signal.

3. Video apparatus according to claim 2, wherein the control means (4) is further responsive to a selection made by the user.

## Patentansprüche

1. Videovorrichtung, die umfasst:
- eine Videoschaltung (18), die einen Videodecoder (10) aufweist und die mit mindestens zwei Typen analoger Videosignale arbeiten kann,
- einen Verbinder (2) zum Empfangen eines Videosignals, wobei der Verbinder (2) mindestens einen ersten Anschlussstift, der mit einem ersten Eingang für ein analoges Videosignal des Videodecoders (10) verbunden ist, mindestens einen zweiten Anschlussstift, der mit einem zweiten Eingang für ein analoges Videosignal des Videodecoders (10) verbunden ist, und mindestens einen dritten Anschlussstift (16), der mit einem Eingang für ein Schnellaustastsignal des Videodecoders (10) verbunden werden kann, aufweist,
- ein Übertragungsmittel, das den ersten Anschlussstift und den zweiten Anschlussstift mit der Videoschaltung (18) koppelt,
**dadurch gekennzeichnet, dass** die Videovorrichtung ferner umfasst:
- ein Schaltmittel (6), das zwischen dem Eingang für ein Schnellaustastsignal des Videodecoders (10) und dem dritten Anschlussstift (16) angeordnet ist, wobei das Schaltmittel auf der Grundlage eines Steuersignals (CTL) zwischen einem verbundenen Zustand und einem getrennten Zustand schaltet,
- ein Detektionsmittel (4), das mit dem dritten Anschlussstift (16) verbunden ist, um zu bestimmen, ob das von dem dritten Anschlussstift (16) empfangene Signal während eines Vollbilds umschaltet,
- ein Steuermittel (4), das auf die Bestimmung zum Senden des Steuersignals (CTL) anspricht, um zu veranlassen, dass das Schaltmittel (6) auf den getrennten Zustand, wenn das von dem dritten Anschlussstift (16) empfangene Signal während eines Vollbilds umschaltet, und andernfalls auf den verbundenen Zustand schaltet.

2. Videovorrichtung nach Anspruch 1, wobei die Videoschaltung (18) ein Mittel (14) zum Aufzeichnen des Videosignals umfasst.

3. Videovorrichtung nach Anspruch 2, wobei das Steuermittel (4) ferner auf eine durch den Nutzer getroffene Auswahl anspricht.

## Revendications

1. Appareil vidéo comprenant :
- un circuit vidéo (18) doté d'un décodeur vidéo (10) et capable de fonctionner avec au moins deux types de signaux vidéo analogiques,
- un connecteur (2) permettant de recevoir un signal vidéo, le connecteur (2) possédant au moins une première broche connectée à une première entrée de signal vidéo analogique du décodeur vidéo (10), au moins une deuxième broche connectée à une deuxième entrée de signal vidéo analogique du décodeur vidéo (10), et au moins une troisième broche (16) pouvant être connectée à une entrée de signal d'effacement rapide du décodeur vidéo (10),
- un moyen de transmission couplant la première broche et la deuxième broche au circuit vidéo (18),
**caractérisé en ce que** l'appareil vidéo comprend en outre
- un moyen (6) de commutation disposé entre l'entrée de signal d'effacement rapide du décodeur vidéo (10) et la troisième broche (16), le moyen de commutation commutant entre l'état connecté et l'état déconnecté en fonction d'un signal de commande (CTL),
- un moyen (4) de détection connecté à la troisième broche (16) permettant de déterminer si le signal reçu de la troisième broche (16) bascule au cours d'une trame,
- un moyen (4) de commande sensible à ladite détermination permettant d'envoyer ledit signal de commande (CTL) de manière à provoquer la commutation dudit moyen (6) de commutation à l'état déconnecté lorsque le signal reçu de la troisième broche (16) bascule au cours d'une trame, et à l'état connecté dans le cas contraire.

2. Appareil vidéo selon la revendication 1, dans lequel le circuit vidéo (18) comprend un moyen (14) d'enregistrement dudit signal vidéo.

3. Appareil vidéo selon la revendication 2, dans lequel le moyen (4) de commande est, en outre, sensible à une sélection effectuée par l'utilisateur.
